# EUROPÄISCHE PATENTANMELDUNG

(11) **EP 3 934 034 A1**
(43) Veröffentlichungstag der Anmeldung: **05.01.2022**
(21) Anmeldenummer: 21181865.3
(22) Anmeldetag: 25.06.2021
(51) Int. Cl.: H02G 3/04, B60L 53/31

(54) **SOCKEL FÜR EINE VERSORGUNGSSTATION**

(30) Priorität: 29.06.2020 DE 102020117090
(71) Anmelder: Compleo Charging Solutions AG, 44309 Dortmund (DE)
(72) Erfinder: Jendrusch, Peter, 44536 Lünen (DE)
(74) Vertreter: Wickord, Wiro

(57) **Zusammenfassung**

Die Erfindung betrifft einen Sockel für eine Versorgungsstation mit einem einstückig hergestellten Sockelkörper (1) umfassend zwei einander beabstandet gegenüberliegende Längsseitenwände (2, 3) und zwei einander beabstandet gegenüberliegende Querseitenwände (4, 5) vorsieht, wobei die Querseitenwände (4, 5) die Längsseitenwände (2, 3) miteinander verbinden, wobei die Längsseitenwände (2, 3) und die Querseitenwände (4, 5) gemeinsam einen innenliegenden Zuführkanal für ein Erdkabel bilden, der in einer Montageposition des Sockels vertikal erstreckt ist, und wobei an wenigstens einer Längsseitenwand (2, 3) und/oder Querseitenwand (4, 5) des Sockelkörpers (1) eine erste Durchführungsöffnung (22) für das Erdkabel gebildet ist, umfassend eine Stirnseitenwand (6) mit einer zweiten Durchführungsöffnung (8) an einer ersten Stirnseite (7) des Sockelkörpers (1), wobei die Längsseitenwände (2, 3) und die Querseitenwände (4, 5) von der Stirnseitenwand (6) abragen, und umfassend eine an einer der ersten Stirnseite (7) gegenüberliegenden zweiten Stirnseite (11) des Sockelkörpers (1) gebildete Aufstandsfläche (13), wobei die Aufstandsfläche (13) in der Montageposition horizontal erstreckt ist, wobei der Sockelkörper (1) aus einem Kunststoffmaterial hergestellt ist, und innenliegend im Bereich der ersten Stirnseite (7) rippenförmige Versteifungselemente (10) und/oder einen sich wenigstens abschnittsweise um die zweite Durchführungsöffnung (8) erstreckenden, nach innen ragenden Kragen (9) vorsieht.

## Beschreibung

### Sockel

Die Erfindung betrifft einen Sockel für eine Versorgungsstation mit einem einstückig hergestellten Sockelkörper umfassend zwei einander beabstandet gegenüberliegende Längsseitenwände und zwei einander beabstandet gegenüberliegende Querseitenwände vorsieht, wobei die Querseitenwände die Längsseitenwände miteinander verbinden, wobei die Längsseitenwände und die Querseitenwände gemeinsam einen innenliegenden Zuführkanal für ein Erdkabel bilden, der in einer Montageposition des Sockels vertikal erstreckt ist, und wobei an wenigstens einer Längsseitenwand und/oder Querseitenwand des Sockelkörpers eine erste Durchführungsöffnung für das Erdkabel gebildet ist, umfassend eine Stirnseitenwand mit einer zweiten Durchführungsöffnung an einer ersten Stirnseite des Sockelkörpers, wobei die Längsseitenwände und die Querseitenwände von der Stirnseitenwand abragen, und umfassend eine an einer der ersten Stirnseite gegenüberliegenden zweiten Stirnseite des Sockelkörpers gebildete Aufstandsfläche, wobei die Aufstandsfläche in der Montageposition horizontal erstreckt ist.

Versorgungsstationen der vorgenannten Art dienen der Bereitstellung elektrischer Energie für elektrisch betreibbare Fahrzeuge. Zugleich können sie ausgebildet sein, um im Rahmen eines übergeordneten Lastenmanagements Energie aus einem Energiespeicher eines mit der Versorgungsstation verbundenen elektrisch betreibbaren Fahrzeugs zur Stabilisierung eines Versorgungsnetzes in das Versorgungsnetz zurückzuspeisen.

Als elektrisch betreibbare Fahrzeuge im Sinne der Erfindung gelten insbesondere alle Automobile (PKW, LKW, Wohnmobile, Zweiräder, Busse, Transporter und andere), Schienenfahrzeuge (insbesondere Lokomotiven), Wasserfahrzeuge (Boote und Schiffe), Luftfahrzeuge sowie Anhänger (Wohnanhänger), mobile Verkaufsstände und andere. Die Versorgungsstation kann verwendet werden zum Bereitstellen von elektrischer Energie für Fahrzeuge mit und ohne eigenen Energiespeicher.

Ein gattungsgemäßer Sockel ist beispielsweise aus der WO 2010/115929 A2 bekannt. Der Sockel sieht einen als Betonfertigteil hergestellten Sockelkörper vor. Er hat demzufolge ein vergleichsweise hohes Gewicht und ist schwer zu handhaben. Zudem ist er spröde.

Aufgabe der Erfindung ist es, einen gattungsgemäßen Sockel für eine Versorgungsstation anzugeben, der ein geringes Gewicht aufweist und einfach zu handhaben ist.

Zur Lösung der Aufgabe ist die Erfindung in Verbindung mit dem Oberbegriff des Patentanspruchs 1 dadurch gekennzeichnet, dass der Sockelkörper aus einem Kunststoffmaterial hergestellt ist, und innenliegend im Bereich der ersten Stirnseite rippenförmige Versteifungselemente und/oder einen sich wenigstens abschnittsweise um die zweite Durchführungsöffnung erstreckenden, nach innen ragenden Kragen vorsieht.

Der besondere Vorteil der Erfindung besteht darin, dass der Sockelkörper als formgebende und das Gewicht des Sockels maßgeblich bestimmende Komponente aus einem im Vergleich zu Beton wesentlich leichteren Kunststoffmaterial hergestellt ist und demzufolge der Sockel ein deutlich geringeres Gewicht hat. Eine ausreichende Festigkeit des Sockelkörpers wird dabei gewährleistet, indem innenliegend im Bereich der ersten Stirnseite, in der der Sockelkörper mit der Versorgungsstation verbunden ist, rippenförmige Versteifungselemente und/oder ein sich jedenfalls abschnittsweise um die zweite Durchführungsöffnung erstreckender, nach innen von der Stirnseitenwand abragender Kragen vorgesehen ist. Durch das Vorsehen der Versteifungselemente beziehungsweise des Kragens gelingt es, die während des Betriebs und insbesondere bei der Installation des Sockels auftretenden Kräfte zuverlässig abzustützen und einer Beschädigung des Sockels beziehungsweise Sockelkörpers entgegenzuwirken. Insbesondere kann durch das Vorsehen der Versteifungselemente beziehungsweise des Kragens sichergestellt werden, dass der Sockelkörper auch bei einer maschinellen Verdichtung des umliegenden Erdreichs ausreichend gegen Beschädigung geschützt ist.

Ein Sockelkörper im Sinne der Erfindung muss nicht zwingend einen rechteckigen beziehungsweise quadratischen Querschnitt aufweisen. Ein erfindungsgemäßer Sockelkörper kann beispielsweise einen vieleckförmigen Querschnitt und/oder eine regelmäßige oder unregelmäßige Querschnittsform aufweisen. Beispielsweise kann der Sockelkörper einen kreisförmigen oder elliptischen Querschnitt aufweisen. Die Querseitenwände und/oder die Längsseitenwände sind dann durch Segmente einer im Querschnitt kreisförmigen beziehungsweise elliptischen mantelseitigen Seitenwandung des Sockelkörpers gebildet. Der Sockelkörper kann insofern beispielsweise eine Kegelstumpfform aufweisen.

Infolge der erheblichen Gewichtseinsparung vereinfacht sich die Installation des erfindungsgemäßen Sockels vor Ort. Die korrekte Positionierung beziehungsweise Ausrichtung des Sockels ist ebenso wie das Einsetzen des Sockels in ein der Montage des Sockels dienendes Erdloch leichter. Darüber hinaus vereinfachen sich auch der Transport des Sockels zum Installationsort sowie die Handhabung des Sockels während der Herstellung und der sich anschließenden nachfolgenden Logistikschritte. Schließlich reduziert sich auch der zeitliche Aufwand bei der Fertigung des erfindungsgemäßen Sockels, da die Aushärtung des Materials entfällt und demzufolge die Fertigungszeit signifikant gesenkt wird.

Nach einer bevorzugten Ausführungsform der Erfindung sind die rippenförmigen Versteifungselemente zwischen den Längsseitenwänden, den Querseitenwänden, der Stirnseitenwand und dem Kragen vorgesehen. Vorteilhaft ergibt sich hierdurch eine außergewöhnlich hohe Festigkeit. Der erfindungsgemäße Sockel kann insbesondere von außen auf den Sockelkörper wirkende Druckkräfte effektiv abstützen. Zugleich kann durch die rippenförmigen Versteifungselemente und dem Kragen auf lokale Materialanhäufungen verzichtet werden. Das Vorsehen der rippenförmigen Versteifungselemente und des Kragens tragen insofern zu einem insgesamt geringen Gewicht des Sockels bei zugleich ausreichend hoher Festigkeit bei.

Der Kragen und/oder die Versteifungselemente sind als Teil des einstückig hergestellten Sockelkörpers realisiert und insbesondere stoffschlüssig mit den Längsseitenwänden und/oder den Querseitenwänden und/oder der Stirnseitenwand und/oder miteinander verbunden. Insofern werden die Versteifungselemente und/oder der Kragen während der einstückigen Herstellung des Sockelkörpers ausgeformt.

Nach einer bevorzugten Ausführungsform der Erfindung liegt eine Wandstärke der Querseitenwände und/oder der Längsseitenwände und/oder der Stirnseitenwand und/oder des Kragens und/oder der rippenförmigen Versteifungselemente zwischen 3 mm und 8 mm und bevorzugt zwischen 3,5 mm und 5,5 mm. In Bezug auf die Gestaltung der Wandstärke haben die umfangreichen Untersuchungen der Anmelderin gezeigt, dass in dem Wandstärkenbereich von 3 mm von 8 mm die automatisierte Fertigung zuverlässig und mit wenig Ausschuss erfolgen kann. Zugleich ergibt sich im Bereich von 3,5 mm bis 5,5 mm eine für nahezu alle denkbaren Anwendungsszenarien ausreichende Festigkeit bei zugleich geringen Zykluszeiten.

Nach einer Weiterbildung der Erfindung ist die Wandstärke der Querseitenwände und/oder der Längsseitenwände und/oder der Stirnseitenwand und/oder des Kragens und/oder der rippenförmigen Versteifungselemente konstant beziehungsweise weist die Wandstärke ein konstantes Nennmaß auf. Vorteilhaft sind durch die konstante Wandstärke ein kunststoffgerechtes Design und/oder eine wirtschaftliche Fertigung begünstigt. Im Sinne der Erfindung ist die Wandstärke konstant, wenn allein tolerierte und/oder prozessbedingte Abweichungen vom Nennmaß auftreten.

Nach einer Weiterbildung der Erfindung ist der Sockelkörper aus einem faserverstärkten Kunststoffmaterial hergestellt. Beispielsweise können duroplastische Reaktionsharze und Glasfasern vorgesehen sein. Insbesondere kann der Sockelkörper aus SMC (sheet moulding compound) hergestellt sein. Hier werden plattenförmige, teigartige Pressmassen mit beispielsweise Polyester- oder Vinylesterharzen verwendet. Die Verstärkungsfasern können als Schnittfasern oder in Mattenbeziehungsweise Gewebeform vorgesehen sein. Die plattenförmigen Pressmassen werden als Halbzeuge in eine Pressform eingelegt und unter hohem Druck in Form gebracht und ausgehärtet.

Beispielsweise können anstelle plattenförmiger Pressmassen Faser-Matrix-Massen genutzt werden, die nicht plattenförmig bereitgestellt sind.

Sockel auf Basis von SMC beziehungsweise Faser-Matrix-Massen sind äußerst widerstandsfähig und langlebig. Sie sind darüber hinaus durch eine hohe Wirtschaftlichkeit sowohl in Bezug auf die eingesetzten Materialien als auch die Fertigung gekennzeichnet.

Nach einer Weiterbildung der Erfindung verjüngt sich der Sockelkörper in Richtung der ersten Stirnseite pyramidenstumpfförmig. Vorteilhaft können durch die Pyramidenstumpfform auf den Sockel wirkende Kräfte sehr zuverlässig abgestützt werden. Darüber hinaus begünstigt die Pyramidenstumpfform die kunststoffgerechte Konstruktion und das fertigungsgerechte Design des Kunststoffsockels.

Nach einer Weiterbildung der Erfindung sind im Bereich der rippenförmigen Versteifungselemente und/oder des Kragens lokale Verdickungsstellen ausgebildet, die bezogen auf die Montageposition horizontal erstreckte Ausdrückflächen begünstigen, insbesondere die Entnahme des Sockelkörpers aus der Werkzeugform.

Nach einer Weiterbildung der Erfindung sind an dem Sockelkörper im Bereich der rippenförmigen Versteifungselemente beziehungsweise des Kragens Aufnahmeelemente ausgeformt, in die zur Befestigung der Versorgungsstation dienende Verbindungselemente eingesetzt sind. An der Stirnseitenwand des Sockelkörpers sind zu den Verbindungselementen korrespondierend angeordnete Durchgangsausnehmungen gebildet, die zur Durchführung eines in die Verbindungselemente festgelegten Befestigungselements dienen. Als Verbindungselemente sind beispielsweise Schraubhülsen oder Muttern vorgesehen. Als Befestigungselemente können Schrauben oder Gewindebolzen vorgesehen werden.

Beispielsweise können die Verbindungselemente unmittelbar bei der Herstellung des Sockelkörpers mit eingearbeitet werden. Beispielsweise können Schraubhülsen in die der Herstellung des SMC-Sockelkörpers dienenden Pressform des Sockelkörpers eingelegt werden. Die Verdickung des Sockelkörpers mit den hierin vorgesehenen Verbindungselementen kann dann in einem einzigen Fertigungsschritt erfolgen.

Nach einer Weiterbildung der Erfindung ragt von den Längsseitenwänden und/oder den Querseitenwänden ein die Aufstandsfläche bereitstellender Fuß nach außen ab. Insbesondere kann vorgesehen sein, dass an dem Fuß Montageausnehmungen vorgesehen sind, die der Festlegung eines Anbauteils dienen. Beispielsweise kann über die Montageausnehmungen während der Installation des Sockels ein Anfahrschutzelement mit angebaut und mit dem Sockel verbunden werden.

Nach einer Weiterbildung der Erfindung ragen von den Längsseitenwänden beziehungsweise den Querseitenwänden Beabstandungselemente nach außen ab. Vorteilhaft können die dünnwandigen Sockel insbesondere dann, wenn sie eine sich in Richtung der ersten Stirnseite des Sockelkörpers verjüngende Pyramidenstumpfform aufweisen, durch das Vorsehen der Beabstandungselemente in sehr einfacher Weise zur Lagerung beziehungsweise zum Transport gestapelt werden. Die Beabstandungselemente sorgen dabei dafür, dass die gestapelten Sockel nicht verklemmen und in einfacher Weise voneinander gelöst werden können. Insbesondere kann dabei vorgesehen sein, dass die Beabstandungselemente stegförmig ausgeformt sind und gestapelte Sockel mit der Aufstandsfläche gegen die Beabstandungselemente des darunter liegenden Sockels gelegt sind.

Nach einer Weiterbildung der Erfindung ist an der ersten Durchführungsöffnung ein nach außen abragender Kragrand gebildet, der die erste Durchführungsöffnung jedenfalls abschnittsweise umgibt. Vorteilhaft ergibt sich durch das Vorsehen des nach außen abragenden Kragrands eine weitere Stabilisierung der die erste Durchgangsausnehmung aufweisenden Längsseitenwand beziehungsweise Querseitenwand. Einer flächigen Durchbiegung derselben ist dadurch entgegengewirkt.

Nach einer Weiterbildung der Erfindung sind der Sockel und/oder der Sockelkörper symmetrisch bezüglich einer in der Montageposition vertikal erstreckten Längsmittelebene und/oder einer in der Montageposition vertikal erstreckten Quermittelebene. Durch die Symmetrie vereinfacht sich Montage des Sockels.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Die Zeichnungen dienen lediglich beispielhaft der Klarstellung der Erfindung und haben keinen einschränkenden Charakter.

Es zeigen:
- Fig. 1: eine perspektivische Ansicht eines Sockelkörpers eines erfindungsgemäßen Kunststoffsockels,
- Fig. 2: eine Querseitenansicht des Sockelkörpers nach Fig. 1,
- Fig. 3: eine Längsseitenansicht des Sockelkörpers nach Fig. 1,
- Fig. 4: eine Unterseitenansicht des Sockelkörper nach Fig. 1,
- Fig. 5: eine Aufsicht auf eine erste Stirnseite des Sockelkörpers nach Fig. 1,
- Fig. 6: einen Schnitt C-C durch den Sockelkörper nach Fig. 1,
- Fig. 7: einen Schnitt B-B durch den Sockelkörper nach Fig. 1,
- Fig. 8: einen Schnitt A-A durch den Sockelkörper nach Fig. 1 und
- Fig. 9: insgesamt fünf baugleiche, gestapelte Sockelkörper.

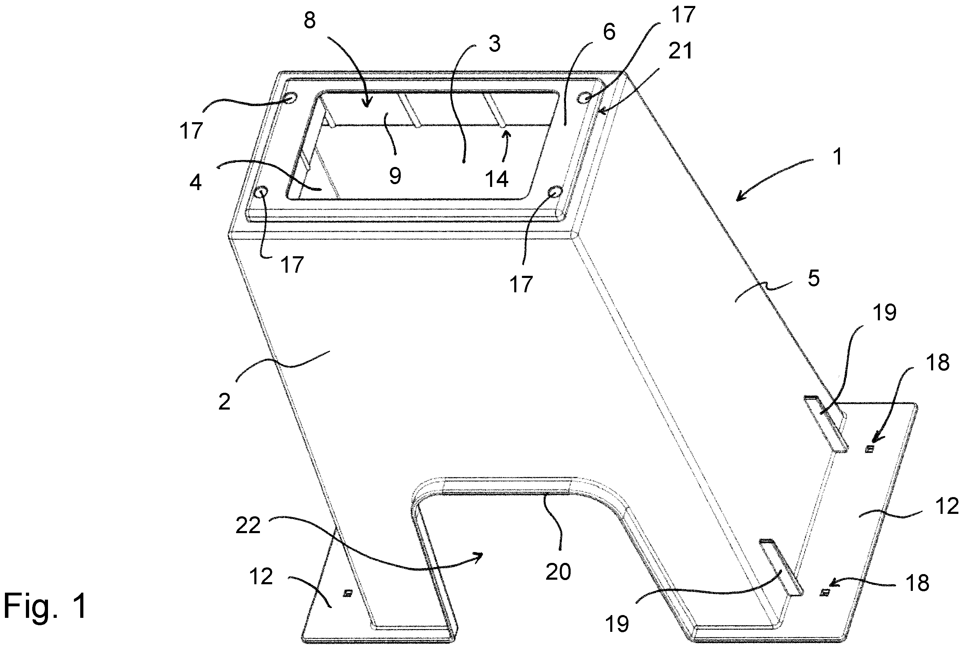

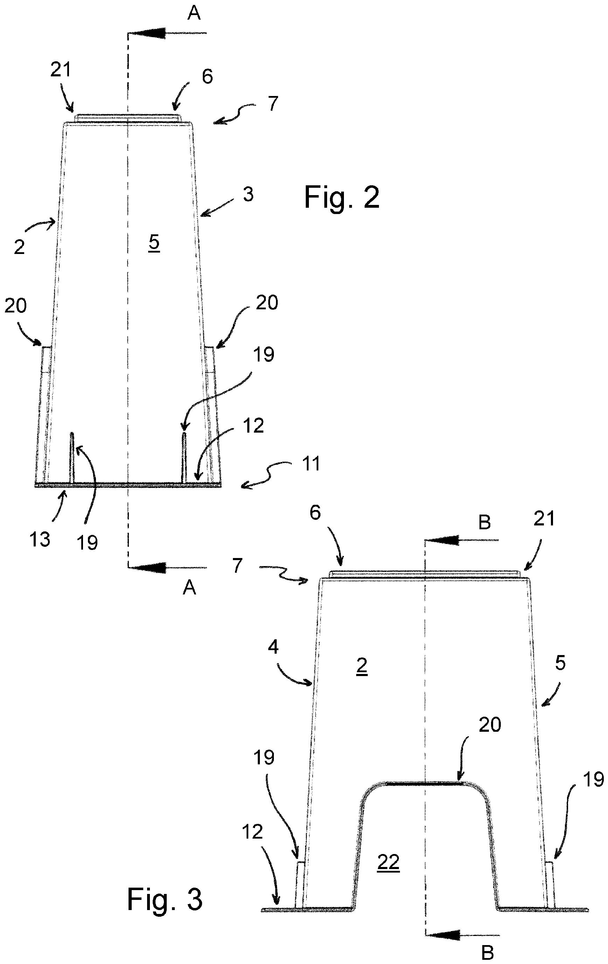

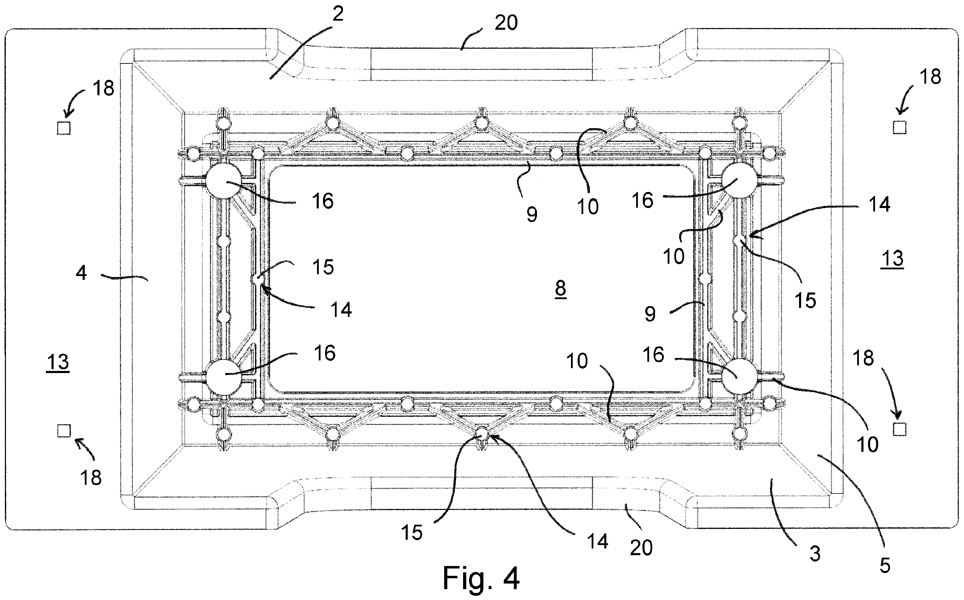

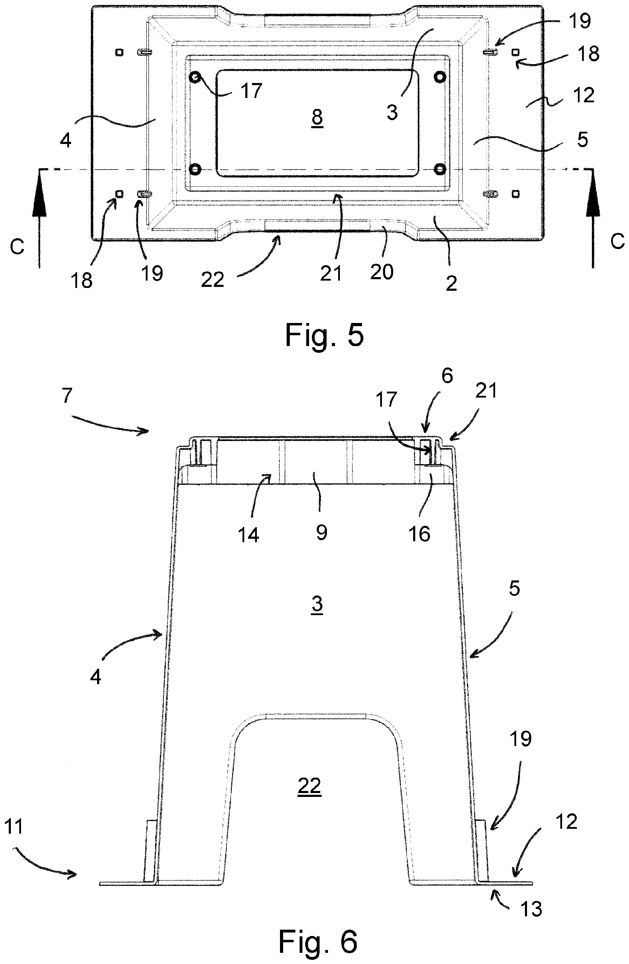

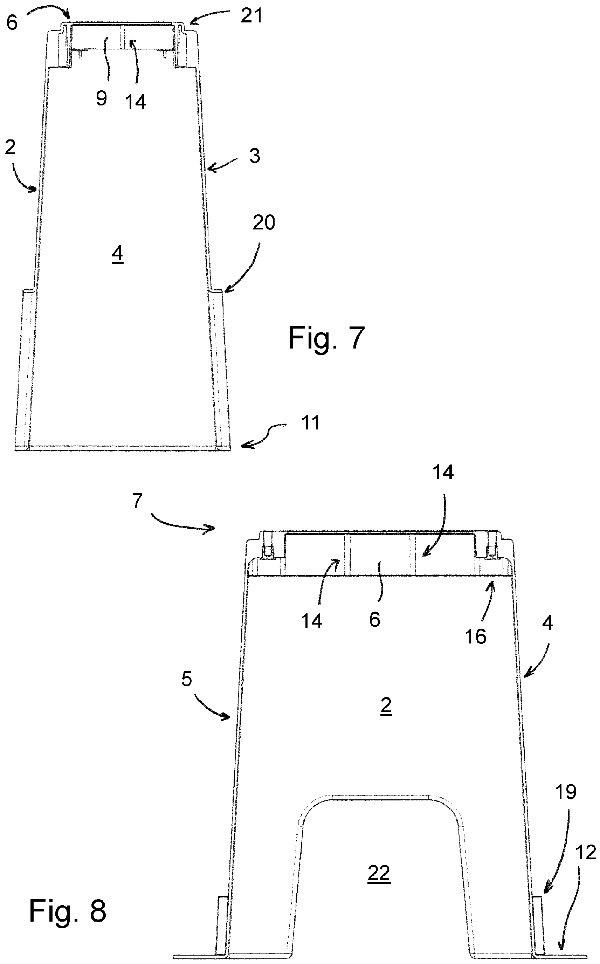

Ein erfindungsgemäßer Sockel für eine Versorgungsstation sieht einen Sockelkörper 1 aus einem Kunststoffmaterial gemäß der Fig. 1 bis 8 vor. Im vorliegenden Fall ist der Sockelkörper aus SMC hergestellt.

Der Sockelkörper 1 umfasst zwei einander beabstandet gegenüberliegende Längsseitenwände 2, 3 sowie zwei die Längsseitenwände 2, 3 miteinander verbindende, einander beabstandet gegenüberliegende Querseitenwände 4, 5 vor. Ferner sieht der Sockelkörper 1 eine Stirnseitenwand 6 vor, die in einer Montageposition des Sockels horizontal erstreckt ist und von der die Längsseitenwände 2, 3 und die Stirnseitenwände 4, 5 abragen. Die Längsseitenwände 2, 3 und die Stirnseitenwände 4, 5 sind bezogen auf eine vertikale Erstreckung des Sockels in der Montageposition geneigt orientiert beziehungsweise leicht schräg angeordnet. Sie geben dem Sockelkörper 1 eine sich in Richtung der Stirnseitenwand 6 verjüngende Pyramidenstumpfform.

Einer durch die Stirnseitenwand 6 definierten ersten Stirnseite 7 liegt eine zweite Stirnseite 11 des Sockelkörpers 1 gegenüber. Im Bereich der zweiten Stirnseite 11 ragen von den Querseitenwänden 4, 5 zu gegenüberliegenden Seiten zwei Füße 12 nach außen ab. Die Füße 12 stellen auf einer der Stirnseitenwand 6 abgewandten Unterseite gemeinsam eine Aufstandsfläche 13 des Sockels bereit. Die Aufstandsfläche 13 ist eben und in der Montageposition des Sockels horizontal erstreckt.

Die Längsseitenwände 2, 3 und die Querseitenwände 4, 5 bilden gemeinsam einen Hohlraum, der einen in der Montageposition des Sockels vertikal erstreckten Zuführkanal für ein in den Figuren nicht dargestelltes Erdkabel definieren, welches dem Anschluss der an dem Sockel festgelegten Versorgungsstation an ein Versorgungsnetz dient. Das Erdkabel wird dabei über eine erste Durchführungsöffnung 22, welche an den einander gegenüberliegenden Längsseitenwänden 2, 3 vorgesehen ist, zu dem im Inneren des Sockels gebildeten Zuführkanal geführt und gelangt dann von dort weiter über eine an der Stirnseitenwand 6 gebildeten zweiten Durchführungsöffnung 8 zu der an dem Sockel angebauten Versorgungsstation. Die erste Durchführungsöffnung 22 ist dabei randseitig an den Längsseitenwänden 2, 3 des Sockelkörpers 1 so vorgesehen, dass sie bis zu der zweiten Stirnseite 11 geführt ist und in die Aufstandsfläche 13 mündet. Die zweite Durchführungsöffnung 8 ist innenliegend an der Stirnseitenwand 6 gebildet, das heißt die Stirnseitenwand 6 umschließt die zweite Durchführungsöffnung 8 in Umfangsrichtung vollständig.

Die zweite Durchführungsöffnung 8 umgibt ein nach innen, das heißt in Richtung der zweiten Stirnseite 11 abragender Kragen 9. Der Kragen 9 folgt der Kontur der zweiten Durchführungsöffnung 8. Der Kragen 9 ist dabei beabstandet zu den Längsseitenwänden 2, 3 und den Querseitenwänden 4, 5 vorgesehen.

Zwischen dem Kragen 9, den Längsseitenwänden 2, 3 und den Querseitenwänden 4, 5 sowie der Stirnseitenwand 6 sind rippenförmige Versteifungselemente 10 vorgesehen, welche unmittelbar, das heißt stoffschlüssig am Kragen 9 sowie an den Seitenwänden 2, 3, 4, 5, 6 angeformt sind. Die rippenförmigen Versteifungselemente 10 sind so orientiert und ausgebildet, dass sie die Festigkeit beziehungsweise Steifigkeit des Sockelkörpers 1 im Bereich der ersten Stirnseite 7 erhöhen. Insbesondere dienen sie der Abstützung von Kräften bei der Montage des Sockels und insbesondere den beim Verdichten des den Sockel umgebenden Erdreichs auftretenden Kräften.

Im Bereich des Kragens 9 beziehungsweise der Versteifungselemente 10 sind lokale Verdickungsstellen 14 ausgebildet, die eine bezogen auf die Montageposition des Sockels horizontal erstreckte Ausdrückfläche 15 bereitstellen. Die Verdickungsstellen 14 mit der Ausdrückfläche 15 dienen dazu, den Sockelkörper 1 über betätigbare Ausdrückstifte aus der Werkzeugform zu lösen und/oder auszuwerfen.

Weiter sind im Bereich der rippenförmigen Versteifungselemente 10 und des Kragens 9 Aufnahmeelemente 16 vorgesehen, in die der Befestigung der Versorgungsstation dienende Verbindungselemente eingesetzt sind. Als Verbindungselemente dienen im vorliegenden Fall Gewindehülsen. Die Befestigung der Versorgungsstation erfolgt dann über Schrauben, die in die Gewindehülsen eingesetzt werden. An dem Sockelkörper 1 sind zu diesem Zweck korrespondierend zu den Verbindungselementen angeordnete Durchgangsausnehmungen 17 vorgesehen, durch die die Schrauben beim Eindringen derselben in die Verbindungselemente hindurchgeführt werden.

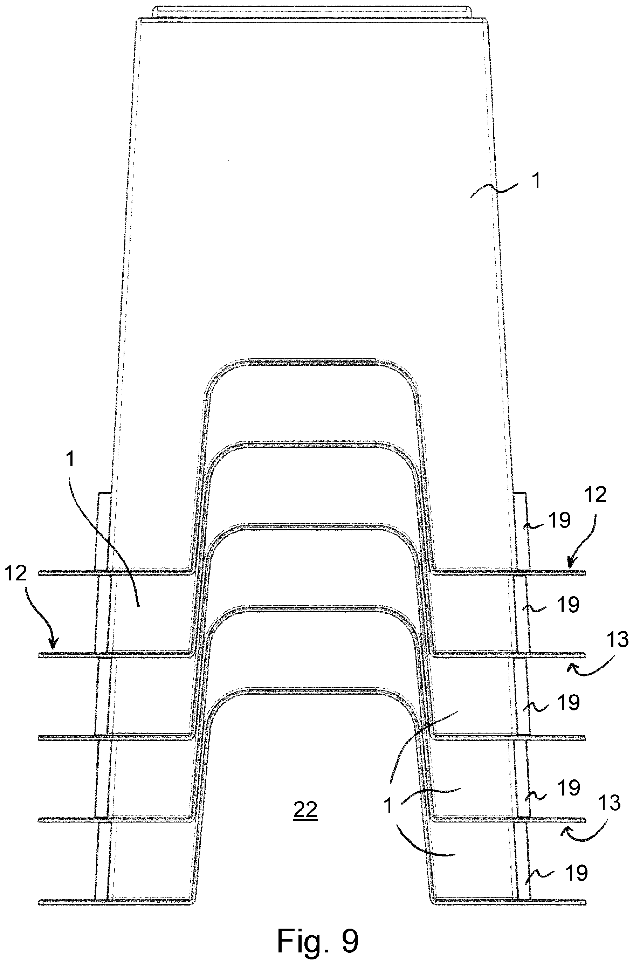

Im Bereich des Fußes 12 sind auf zwei einander gegenüberliegenden Seiten insgesamt vier Montageausnehmungen 18 vorgesehen. Die Montageausnehmungen 18 sind durchbruchartig realisiert. Sie dienen der Festlegung eines Anbauteils und insbesondere der Festlegung eines Anfahrschutzelements, welches im Rahmen der Montage des Sockels an diesem festgelegt und zusammen mit ihm verbaut wird. Der erfindungsgemäße Sockel sieht weiterhin Beabstandungselemente vor, die sich im vorliegenden Ausführungsbeispiel an den einander gegenüberliegenden Querseitenwänden 4, 5 befinden und von diesen nach außen abragen. Die Beabstandungselemente 19 erstrecken sich auf einer der Aufstandsfläche 13 gegenüberliegenden Seite bis zu dem Fuß 12. Die Beabstandungselemente 19 sind dabei stegförmig gebildet. Durch das Vorsehen der Beabstandungselemente 19 können mehrere Sockel in einfacher Weise gestapelt werden. Ein gestapelter Sockel stützen sich dabei mit der Aufstandsfläche 13 an den Beabstandungselementen 19 eines darunter vorgesehenen Sockels ab, vergleiche Fig. 9.

An der ersten Durchführungsöffnung 22 ist ein nach außen abragender Kragrand 20 gebildet. Der Kragrand 20 umgibt die erste Durchführungsöffnung 22 abschnittsweise.

Der Sockelkörper 1 weist im Bereich der Längsseitenwände 2, 3 und der Querseitenwände 4, 5 eine konstante Wandstärke von 4,5 mm auf. Die konstante Wandstärke von 4,5 mm ist auch für die Stirnseitenwand 6, den Kragen 9 und die Versteifungselemente 10 außerhalb der Verdickungsstelle 14 realisiert. Ebenso weisen die Füße 12 eine Wandstärke von 0,5 mm auf.

Im Bereich der ersten Stirnseite 7 ist an dem Sockelkörper 1 eine Stufe 21 ausgebildet. Die Stufe 21 dient als Positionierhilfe für die Versorgungsstation, die an dem Sockel angebaut und demzufolge relativ zu dem Sockel positioniert werden muss.

## Patentansprüche

1. Sockel für eine Versorgungsstation mit einem einstückig hergestellten Sockelkörper (1) umfassend zwei einander beabstandet gegenüberliegende Längsseitenwände (2, 3) und zwei einander beabstandet gegenüberliegende Querseitenwände (4, 5) vorsieht, wobei die Querseitenwände (4, 5) die Längsseitenwände (2, 3) miteinander verbinden, wobei die Längsseitenwände (2, 3) und die Querseitenwände (4, 5) gemeinsam einen innenliegenden Zuführkanal für ein Erdkabel bilden, der in einer Montageposition des Sockels vertikal erstreckt ist, und wobei an wenigstens einer Längsseitenwand (2, 3) und/oder Querseitenwand (4, 5) des Sockelkörpers (1) eine erste Durchführungsöffnung (22) für das Erdkabel gebildet ist, umfassend eine Stirnseitenwand (6) mit einer zweiten Durchführungsöffnung (8) an einer ersten Stirnseite (7) des Sockelkörpers (1), wobei die Längsseitenwände (2, 3) und die Querseitenwände (4, 5) von der Stirnseitenwand (6) abragen, und umfassend eine an einer der ersten Stirnseite (7) gegenüberliegenden zweiten Stirnseite (11) des Sockelkörpers (1) gebildete Aufstandsfläche (13), wobei die Aufstandsfläche (13) in der Montageposition horizontal erstreckt ist, **dadurch gekennzeichnet, dass** der Sockelkörper (1) aus einem Kunststoffmaterial hergestellt ist, und innenliegend im Bereich der ersten Stirnseite (7) rippenförmige Versteifungselemente (10) und/oder einen sich wenigstens abschnittsweise um die zweite Durchführungsöffnung (8) erstreckenden, nach innen ragenden Kragen (9) vorsieht.

2. Sockel nach Anspruch 1, **dadurch gekennzeichnet, dass** die rippenförmigen Versteifungselemente (10) zwischen den Längsseitenwänden (2, 3) und/oder Querseitenwänden (4,5) und/oder der Stirnseitenwand (6) und/oder dem Kragen (9) vorgesehen sind.

3. Sockel nach Anspruch 1 oder 2, **dadurch gekennzeichnet, dass** eine Wandstärke der Querseitenwände (4, 5) und/oder der Längsseitenwände (2, 3) und/oder der Stirnseitenwand (6) und/oder des Kragens (9) und/oder der rippenförmigen Versteifungselemente (10) zwischen 3 mm und 8 mm beträgt und bevorzugt zwischen 3,5 mm und 5,5 mm liegt.

4. Sockel nach einem der Ansprüche 1 bis 3, **dadurch gekennzeichnet, dass** die Wandstärke der Querseitenwände (4, 5) und/oder der Längsseitenwände (2, 3) und/oder der Stirnseitenwand (6) und/oder des Kragens (9) und/oder der rippenförmigen Versteifungselemente (10) ein konstantes Nennmaß aufweist.

5. Sockel nach einem der Ansprüche 1 bis 4, **dadurch gekennzeichnet, dass** der Sockelkörper (1) aus einem faserverstärkten Kunststoffmaterial hergestellt ist und bevorzugt duroplastische Reaktionsharze und Glasfasern vorsieht und besonders bevorzugt aus SMC hergestellt ist.

6. Sockel nach einem der Ansprüche 1 bis 5, **dadurch gekennzeichnet, dass** der Sockelkörper (1) sich in Richtung der ersten Stirnseite (7) verjüngt und/oder eine Pyramidenstumpfform aufweist.

7. Sockel nach einem der Ansprüche 1 bis 6, **dadurch gekennzeichnet, dass** im Bereich der rippenförmigen Versteifungselemente (10) und/oder des Kragens (9) wenigstens eine lokale Verdickungsstelle (14) ausgebildet ist, die eine bezogen auf die Montageposition horizontal erstreckte Ausdrückfläche (13) bereitstellt.

8. Sockel nach einem der Ansprüche 1 bis 7, **dadurch gekennzeichnet, dass** im Bereich der rippenförmigen Versteifungselemente (10) und/oder des Kragens (9) des Sockelkörpers (1) Aufnahmeelemente (16) ausgeformt sind, in die der Befestigung der Versorgungsstation dienende Verbindungselemente eingesetzt sind, und dass an der Stirnseitenwand (6) des Sockelkörpers (1) zu den Verbindungselementen korrespondierend angeordnete Durchgangsausnehmungen (17) ausgebildet sind, die zur Durchführung eines in dem Verbindungselement festlegbaren Befestigungselements dienen.

9. Sockel nach einem der Ansprüche 1 bis 8, **dadurch gekennzeichnet, dass** von wenigstens einer Längsseitenwand (2, 3) und/oder wenigstens einer Querseitenwand (4, 5) ein die Aufstandsfläche (13) bereitstellender Fuß (12) nach außen abragt.

10. Sockel nach einem der Ansprüche 1 bis 9, **dadurch gekennzeichnet, dass** an dem Fuß (12) eine Montageausnehmung (18) vorgesehen ist, wobei die Montageausnehmung (18) ausgebildet ist zur Festlegung eines Anbauteils und bevorzugt zur Festlegung eines Anfahrschutzelements.

11. Sockel nach einem der Ansprüche 1 bis 9, **dadurch gekennzeichnet, dass** von wenigstens einer Längsseitenwand (2, 3) und/oder wenigstens einer Querseitenwand (4, 5) ein Beabstandungselement (19) nach außen abragt.

12. Sockel nach Anspruch 11, **dadurch gekennzeichnet, dass** das wenigstens ein Beabstandungselement (19) sich bis zu dem Fuß erstreckt und/oder auf einer der Aufstandsfläche gegenüberliegenden Seite vorgesehen ist und/oder stegförmig gebildet ist.

13. Sockel nach einem der Ansprüche 1 bis 11, **dadurch gekennzeichnet, dass** an der ersten Durchführungsöffnung (22) ein nach außen abragender Kragrand (20) gebildet ist, wobei der Kragrand (20) die erste Durchführungsöffnung (22) jedenfalls abschnittsweise umgibt.

14. Verwendung eines Sockels nach einem der Ansprüche 1 bis 12 als erdmontierter Sockel einer Versorgungsstation für elektrisch betreibbare Fahrzeuge.
